# EUROPÄISCHE PATENTSCHRIFT

(11) **EP 3 243 564 B1**
(45) Veröffentlichungstag und Bekanntmachung des Hinweises auf die Patenterteilung: **16.12.2020**
(21) Anmeldenummer: 16401041.5
(22) Anmeldetag: 12.07.2016
(51) Int. Cl.: B01J 19/24, B01J 19/26, B01J 4/00

(54) **VORRICHTUNG UND VERFAHREN FÜR DIE DURCHFÜHRUNG VON FÄLLUNGS- REAKTIONEN UNTER BETEILIGUNG VON MINDESTENS ZWEI AUSGANGS- PRODUKTEN**
DEVICE AND METHOD FOR PERFORMING PRECIPITATION REACTIONS WITH THE PARTICIPATION OF AT LEAST TWO OUTPUT PRODUCTS
DISPOSITIF ET PROCÉDÉ POUR LA RÉALISATION DE RÉACTIONS DE PRÉCIPITATION PAR ASSOCIATION D'AU MOINS DEUX PRODUITS DE DÉPART

(30) Priorität: 13.05.2016 DE 102016108872
(43) Veröffentlichungstag der Anmeldung: 15.11.2017
(73) Patentinhaber: Karlsruher Institut für Technologie, 76131 Karlsruhe (DE)
(72) Erfinder: Kügler, Ricco, 76137 Karlsruhe (DE); Metzger, Lukas, 76137 Karlsruhe (DE); Kind, Matthias, 76135 Karlsruhe (DE)

(56) Entgegenhaltungen:
- WO-A1-2009/027232
- WO-A1-2011/116763
- WO-A1-2014/154209
- DE-A1-102005 048 201

## Beschreibung

Die Erfindung betrifft eine Vorrichtung und ein Verfahren für die Durchführung von Vermischungen oder Fällungsreaktionen unter Beteiligung von mindestens zwei Ausgangsprodukten zu mindestens einem Fällungsreaktionsprodukt gemäß des Anspruchs 1 bzw. 13.

Feine kristalline Partikel beispielsweise in Größenbereichen von etwa 10 Nanometern bis etwa 10 Mikrometer werden üblicherweise über ein Verfahren der Fällungskristallisation erzeugt. Sie finden ihre Anwendung insbesondere in weiten Gebieten des industriellen Chemie- oder Pharmasektors, wie z.B. in pharmazeutischen Wirkstoffen, als Pigmente und Additive in der Farbstoffindustrie oder auch als Einsatzstoffe in der Katalysatorherstellung. Dabei stellt eine vorgegebene Anforderung an die Produktqualität wie zum Beispiel eine einheitliche, möglichst enge Partikelgrößenverteilung oder eine uniforme Morphologie der Kristalle hohe Anforderungen an den Prozess.

Der überwiegende Anteil der Fällungskristallisationen wird aktuell in Rührkesseln im absatzweisen oder kontinuierlichen Betrieb hergestellt. Rührkesselreaktoren besitzen die Eigenschaft lokal inhomogene Verteilungen des Leistungseintrags und somit auch lokal unterschiedliche Vermischungszustände auszubilden. Dies führt zu schwer vorherzusagenden, undefinierten Partikelgrößenverteilungen.

Alternativen zu den vorgenannten Rührkesseln bilden Mischdüsenanordnungen für Fällungsreaktionen. Sie ermöglichen eine sehr gut reproduzierbare, definierte Einstellung bestimmter Partikeleigenschaften (z.B. Partikelgröße). Jedoch neigen diese Mischdüsenanordnungen während des Betriebs zum Verstopfen oder Verblocken, was ökonomisch eine starke Unsicherheit durch Betriebsausfälle darstellt und damit den industriellen Einsatz erheblich einschränkt oder wirtschaftlich gar ausschließt. Im kontinuierlichen Mischdüsenbetrieb lagert sich in der Partikelentstehungszone, auch Mischzone genannt, immer mehr ausgefallenes Material an der Wand der Mischzone an, was letztendlich zu steigendem Druckverlust bis hin zur Verblockung des Strömungsquerschnittes führt.

Im produktionstechnisch nicht relevanten Labormaßstab gilt das Mischdüsenverfahren jedoch als etabliertes Verfahren. Dabei kommen verschiedene Anordnungen von Mischdüsen zum Einsatz (z.B. Y- oder T-Mischer).

Bei einem T-Mischer münden zwei Mischdüsen im 180°-Winkel zueinander in einer orthogonal zu diesen orientierte Mischkammer (Anordnung erinnert an ein T), die Ausrichtungsachsen der gegeneinander orientierten Mischdüsen entsprechen sich in ihrer Lage.

Bei einem Y-Mischer sind die beiden gegeneinander gerichteten Mischdüsen in einem Winkel ungleich 180° ausgerichtet, d.h. sie kreuzen sich in der Mischkammer, zu deren Ausrichtung sie einen Winkel ungleich 90° einnehmen.

Weiterhin sind Zyklonmischer bekannt, bei denen die Mischdüsen tangential in eine rotationssymmetrische Mischkammer ausmünden. In der Mischkammer werden die zu Ausgangssubstanzen der Fällungsreaktion in Rotation versetzt, worauf es zu einer Vermischung und Fällungsreaktion kommt.

In **[1]** wird ein Zyklonmischer als Vortex-Mischer beschrieben, bei dem das Misch- oder Reaktionsgefäß zusätzlich auf einen Schütteleinrichtung aufgesetzt ist. In diesem werden jedoch keine Feststoffanlagerungen unterdrückt, sondern eine höhere Vermischungsintensität angestrebt.

Ferner wird in der WO 2009/027232 A1 eine Vorrichtung für die Durchführung von Fällungsreaktionen unter Beteiligung von zwei Ausgangsprodukten zu einem Fällungsreaktionsprodukt mittels eines Y-Mischers mit gegenläufig orientierten Prallstrahldüsen vorgeschlagen, bei der die Einleitung eines inerten Fluids entlang der Wandung der Mantelfläche vorgeschlagen wird.

Die vorgenannten Vorrichtungen mit Mischdüsen neigen im kontinuierlichen Betrieb grundsätzlich zu Verkrustungen, stellen somit eine signifikante produktionstechnische Einschränkung dar und sind daher bei industriellen Prozessen nicht etabliert.

Ausgehend hiervon ist es die **Aufgabe der Erfindung,** durch eine geeignete Vorrichtung und ein geeignetes Verfahren den verkrustungsarmen Betrieb einer Mischdüsenanordnung für Fällungsreaktionen zu gewährleisten.

Die Aufgabe wird mit einer Vorrichtung und einem Verfahren mit den Merkmalen des ersten bzw. dreizehnten Patentanspruchs gelöst. Auf diese rückbezogene Unteransprüche geben vorteilhafte Ausgestaltungen wieder.

Zur Lösung der Aufgabe wird eine **Vorrichtung** für die Durchführung von Fällungsreaktionen unter Beteiligung von mindestens zwei Ausgangsprodukten zu mindestens einem Fällungsreaktionsprodukt vorgeschlagen. Diese weist eine Mischzone auf, die zwischen zwei Endbereichen von einer Mantelfläche umgeben ist. In diese münden mindestens zwei Prallstrahldüsen für die mindestens zwei Ausgangsprodukte ein, wobei die Prallstrahldüsen gegenläufig orientierte Ausrichtungen aufweisen. Die mindestens zwei Ausgangsprodukte werden in der Mischzone zu dem mindestens einen Fällungsreaktionsprodukt vorzugsweise durch mindestens eine chemische Reaktion umgewandelt. Mindestens eines der mindestens einen Fällungsreaktionsprodukte ist vorzugsweise ein Endprodukt oder alternativ mindestens ein Zwischenprodukt, das vorzugsweise in der Mischzone zu einem Endprodukt weiter reagiert.

Die gegenläufig orientierten Ausrichtungen der mindestens zwei Prallstrahldüsen erstrecken sich vorzugsweise jeweils um Symmetriegeraden, wobei sich jene in der Mischzone schneiden, vorzugsweise mit einem Winkel ungleich 180°, weiter bevorzugt zwischen 20 und 150° (Y-Mischeranordnung). Bevorzugt sind dabei ein Teil oder bevorzugt alle Prallstrahldüsen in Richtung des Auslasses geneigt angeordnet oder orientiert.

Ein Merkmal dieser Vorrichtung wird durch eine Hüllstromzone zwischen Mischzone und Mantelfläche gebildet, wobei die Hüllstromzone unmittelbar an die Mischzone und die Mantelfläche angrenzt und die Hüllstromzone zwischen den beiden Endbereichen hydraulische Querschnitte der Mischzone begrenzt. Die Hüllstromzone ist somit eine Barriere für die mindestens zwei Ausgangsprodukte und das mindestens eine Fällungsreaktionsprodukt zwischen Mischzone und Mantelfläche. Die Vorrichtung stellt damit eine Hüllstrommischdüse dar.

Ein weiteres Merkmal umfasst folglich mindestens ein in die Hüllstromzone ausmündender Zulauf für ein Hüllstromfluid.

Dabei sind der mindestens eine Zulauf und die mindestens zwei Prallstrahldüsen in einem Endbereich der Mischzone und ein Auslass für das mindestens eine Fällungsreaktionsprodukt und das Hüllstromfluid in dem anderen Endbereich vorgesehen.

Der Zulauf ist vorzugsweise als eine oder mehrere Runddüsen oder als eine oder mehrere Schlitzdüsen gestaltet, die tangential zur Mantelfläche in die Hüllstromzone ausmünden und somit eine wendelförmige Ausrichtung der weiter bevorzugten laminaren Fluidströmung entlang der Mantelfläche vorgeben. Im Falle mehrerer Rund- oder Schlitzdüsen sind diese gleichsinnig tangential zur Mantelfläche orientiert angeordnet.

Eine weitere Ausgestaltung des mindestens einen Zulaufs umfasst einen Zulauf für ein Hüllstromfluid an der Mantelfläche abseits der beiden Endbereiche. Mit diesen lässt sich ein Hüllstromfluid auch zwischen den beiden Endbereichen einleiten. Insbesondere lassen sich damit auch unterschiedliche Hüllstromfluide an unterschiedlichen Stellen der Hüllstromzone einleiten und damit durch Mischung die Zusammensetzung des Hüllstromfluids zum Auslass hin verändern und einer ggf. abweichenden Anforderung an die jeweiligen durch fortschreitende Mischung oder Reaktionsfällung geänderten Zusammensetzungen in der Mischzone anpassen.

Das Hüllstromfluid wird folglich als Volumenstrom über mindestens einen Zulauf der vorgenannten Art in die Hüllstromzone zwischen Mantelfläche und Mischzone geleitet und bildet dort eine vorzugsweise die gesamte Mantelfläche überspannende Fluid-zwischenschicht aus, die rohrförmig als Film ausgestaltet die Mischzone umgibt. Dadurch wird in vorteilhafter Weise ein Kontakt zumindest des Fällungsreaktionsprodukts, vorzugsweise auch der Ausgangsprodukte mit der Mantelfläche behindert, vorzugsweise vollständig unterbunden. Die störungsarme Fluidführung wird zudem durch eine Vermeidung von Strömungsgeschwindigkeitsänderungen, insbesondere Beschleunigungen weiter gestützt. Folglich bleiben die hydraulischen Querschnitte gleich und/oder erweitern sich, bevorzugt nur lokal, weiter bevorzugt lokal zum Auslauf hin (Y-Mischdüsenanordnung).

Eine weitere Ausgestaltung der Vorrichtung (Hüllstrommischdüse) sieht eine Rauigkeit der zur Hüllstromzone gerichteten Oberfläche der Mantelfläche vor. Durch die Rauigkeit werden die Ausdehnung einer sog. Flüssigkeitsgrenzschicht und damit auch der Reibungswiderstand der vorzugsweise laminar eingestellten Strömung des Hüllstromfluids in der Hüllstromzone beeinflusst. Vorzugsweise wird ein Mittelwert der Rauigkeit der zur Hüllstromzone hin gerichteten Mantelflächenoberfläche von 1 bis 50 µm, vorzugsweise zwischen 10 und 20 µm vorgesehen.

Das Hüllstromfluid wird vorzugsweise kontinuierlich als Volumenstrom über den mindestens einen vorgenannten Zulauf in die Hüllstromzone eingeleitet und über den Auslass wieder abgelassen. Mit zunehmendem Volumenstrom in die Hüllstromzone vergrößert sich bei Ableitung über den vorgenannten Auslass für das mindestens eine Fällungsreaktionsprodukt und das Hüllstromfluid in dem anderen Endbereich der Vorrichtung tendenziell die Filmdicke der Hüllstromzone zwischen Mantelfläche und Mischzone. Dies verbessert wiederum die Sperrwirkung Hüllstromzone gegenüber einem Durchdringen von Bestandteilen aus der Mischzone hin zur Mantelfläche.

Vorzugsweise mündet der mindestens eine Zulauf tangential oder koaxial zur Mantelfläche in die Hüllstromzone aus. Dies unterstützt eine Ausbildung einer laminaren Hüllstromfluidströmung in der Hüllstromzone und behindert eine Vermischung oder Emulgierung von Bestandteilen aus einem der Ausgangsprodukte oder Fällungsreaktionsprodukte mit Bestandteilen des Hüllstromfluids.

Weiterhin wird zur Lösung der Aufgabe ein **Verfahren** für die Durchführung von Fällungsreaktionen unter Beteiligung von mindestens zwei Ausgangsprodukten vorgeschlagen. Die Verfahrensdurchführung erfolgt vorzugsweise an einer vorgenannten Vorrichtung, d.h. einer Hüllstrommischdüse. Das Verfahren umfasst ein Einbringen eines Hüllstromfluids durch den mindestens einen Zulauf in die Hüllstromzone, ein Einbringen der mindestens zwei Ausgangsprodukte durch die mindestens zwei in die Mischzone orientierte Prallstrahldüsen in die Mischzone, wobei Prallstrahldüsen gegenläufig orientierte Ausrichtungen aufweisen, wobei die mindesten zwei Ausgangsprodukte in der Mischzone zu einem Fällungsreaktionsprodukt gewandelt werden sowie ein Ausleiten einer Mischung aus Fällungsreaktionsprodukt sowie dem Hüllstromfluid über den Auslass aus der Mischzone.

Ein wesentliches Verfahrensmerkmal ist dadurch gekennzeichnet, dass durch die Hüllstromzone die Mantelfläche benetzt wird, sodass eine unmittelbare Einwirkung der gemischten Ausgangsprodukte und/oder des Fällungsreaktionsprodukts auf die Mantelfläche verhindert wird.

Vorzugsweise umschließt die Hüllstromzone einen hydraulischen Querschnitt der Mischzone und benetzt dabei die Mantelfläche über eine Länge von mindestens zweimal dem hydraulischen Querschnitt der Mischzone im Vermischungsbereich der gemischten Ausgangsprodukte. Die hydraulischen Querschnitte weisen zwecks einer möglichst störungsarmen Strömung insbesondere in der Hüllstromzone vorzugsweise an jeder Stelle zwischen den beiden Endbereichen knickfreie, weiter bevorzugt kreisförmige Umgrenzungslinien auf.

Optional erfolgt im Rahmen des Verfahrens eine dem Ausleiten nachfolgende Phasentrennung der Mischung in das Fällungsreaktionsprodukt sowie dem Hüllstromfluid. Dies ermöglicht in vorteilhafter Weise nicht nur eine erhöhte Ausbeute am Fällungsreaktionsprodukt, sondern auch eine Rezyklierung des Hüllstromfluids nach der Phasentrennung zu mindestens einem der Zuläufe zurück in die Hüllstromzone.

Das **Hüllstromfluid** ist in einer ersten Ausgestaltung inert, reaktionsträge und nicht mischbar oder unlöslich gegenüber allen in der Mischkammer präsenten Produkten, d.h. gegenüber den mindestens zwei Ausgangsprodukten und den mindestens einem Fällungsreaktionsprodukt. Ein solches Hüllstromfluid ist folglich als nicht durchdringbare Barriere konzipiert.

Das Hüllstromfluid einer weiteren Ausgestaltung besteht oder umfasst eine gegenüber zumindest einem der Ausgangsprodukten oder den mindestens einem Fällungsreaktionsprodukt inerte oder reaktionsträge, vorzugsweise auch nicht mischbare Fluidkomponente.

Die vorgenannte Ausgestaltung lässt grundsätzlich auch eine Löslichkeit oder partielle Löslichkeit mit mindestens einem der vorgenannten Produkte in der Mischzone zu. Das Hüllstromfluid ist dann beispielsweise für eine selektive Aufnahme dieses mindestens einen Produkts (Substanz) nutzbar, das dann entweder mit dem Hüllstromfluid die Vorrichtung verlässt oder an einer anderen Stelle in der Vorrichtung unter inzwischen geänderten Konzentrationsverhältnissen wieder an die bereits fortgeschrittene Vermischung oder Reaktion in die Mischzone wieder abgegeben wird. Im letzten Fall dient das Hüllstromfluid als Transportpuffer für die selektiv aufgenommenen und später wieder abgegebenen Substanzen. Ein möglicher Transport des selektiv im Hüllstromfluid gelösten Produkts hin zur Mantelfläche ist tolerierbar, da unter Abwesenheit der weiteren in der Mischzone vorliegenden anderen Produkte ein möglicher Reaktionspartner fehlt und damit eine mögliche Verkrustungsgefahr mangels Reaktion dann ausschließbar ist, wenn das gelöste Produkt keine Verbindung mit der Mantelfläche eingeht.

Eine alternative weitere Ausgestaltung sieht ein Hüllstromfluid vor, das hinsichtlich der Ausgangsprodukte und/oder Fällungsreaktionsprodukte artähnliche oder lösliche Komponenten aufweist. Anteile von Ausgangs- und Fällungsreaktionsprodukte werden zwar vom Hüllstromfluid aufgenommenen, jedoch durch dieses bereits vor Erreichen der Mantelfläche mit diesem aus der Hüllstromzone wieder ausgeleitet. Dies schließt auch bevorzugte Ausgestaltungen mit ein, bei dem das Hüllstromfluid und die mindestens zwei Ausgangsprodukte und/oder deren Mischung eine Löslichkeit oder partielle Löslichkeit aufweisen. Beispielsweise lassen sich in letztgenannter Ausgestaltung die Möglichkeit einer Einmischung von mindestens einem Additiv (z.B. Reaktionspartner oder Katalysator) für das Fällungsreaktionsprodukt realisieren, das über die Hüllstromzone in die Mischzone übergeleitet wird.

Das Hüllstromfluid ist entweder eine Flüssigkeit, alternativ eine Lösung oder Suspension aus mindestens zwei Bestandteilen. Mindestens einer dieser Bestandteile ist vorzugsweise als Katalysator, als Additiv oder als Transportsubstanz in fester (z.B. Partikel, Adsorbenz) oder flüssiger Modifikation zur Beeinflussung der Mischung oder Reaktion in der Mischzone nutzbar.

Das Hüllstromfluid besteht in einer alternativen Ausgestaltung aus einem Gas oder einem Aerosol aus mindestens einem weiteren Bestandteil (z.B. einzumischende Partikel oder Flüssigkeiten).

Durch das Hüllstromfluid werden insbesondere im Bereich der Mischzone durch eine aufgeprägte tangentiale Schutzströmung (Hüllstrom) eine Verkrustung mit Feststoff und ein daraus resultierendes Verstopfen der Mischzone verhindert.

Eine bevorzugte Ausgestaltung der Hüllstromzone ist derart gestaltet, dass sich die Hüllstromzone auch über die Auslässe der mindestens zwei in die Mischzone orientierten Prallstrahldüsen für die mindestens zwei Ausgangsprodukte erstreckt. Die Düsen werden dabei vorzugsweise vollständig vom Hüllstromfluid umspült, während die durch die Düsen eingebrachten Ausgangsprodukte vorzugsweise zunächst noch vom Hüllstromfluid ummantelt, d.h. durch Teile der Hüllstromzone hindurch in die Mischzone geführt werden. In vorteilhafter Weise wird durch eine diese Ausgestaltung verhindert, dass die Düsenöffnung durch mehr als nur das unmittelbar eingebrachte Ausgangsprodukt in Kontakt gerät und sich folglich auch keine Reaktionsprodukte mit anderen Ausgangsprodukten an der Düsenöffnung absetzen.

Die Vorrichtung umfasst in einer bevorzugten Ausführung nachfolgende Mittel zur Phasentrennung zwischen dem Hüllstromfluid und Misch- oder Fällungsprodukt am Auslass. Weiter bevorzugt ist eine Rezylierungsleitung für das zuvor abgetrennte Hüllstromfluid vom Auslass zurück zu mindestens einen in die Hüllstromzone ausmündenden Zulauf für ein Hüllstromfluid vorgesehen.

Zusammenfassend betrachtet basiert eine bevorzugte Vorrichtung (Hüllstrommischdüse) auf einer Kombination aus einer Zyklon- und Y-Mischdüsenanordnung. Die Hauptströmungsrichtung des Y-Mischers in der Mischzone ist axial, während die Hauptströmung des Zyklon-Mischers in der die Mischzone rohrförmig umgrenzenden Hüllstromzone tangential wendelförmig ausgerichtet ist. Beide Strömungsrichtungen sind innerhalb einem durch die Mantelfläche der Hüllstrommischdüse begrenzten bevorzugt zylindrischen Volumen (umfassend Mischzone und Hüllstromzone) simultan realisierbar, ohne dass ein signifikanter Einfluss auf die bevorzugten Strömungsrichtungen ausgeübt wird.

Ein Prototyp der Hüllstrommischdüse wurde bereits realisiert und wird im Rahmen der nachfolgenden Ausführungsbeispielen beschrieben.

Die Erfindung wird im Folgenden anhand von Ausführungsbeispielen und Figuren näher erläutert. Die dabei beschriebenen beispielhaften Ausgestaltungsdetails werden dabei beispielhaft an bestimmten Ausführungsbeispielen beschrieben, ohne auf diese beschränkt zu sein. Vielmehr dienen sie dabei der Anschauung und Erläuterung und sind im Rahmen der Erfindung grundsätzlich miteinander auch in anderen Ausführungsbeispielen kombinierbar. Es zeigen
**Fig.1** eine schematische Schnittansicht einer ersten Ausführung der Vorrichtung (Hüllstrommischdüse) mit nur endbereichsseitig angeordneten Prallstrahldüsen, Zuläufe und Auslass,
**Fig.2** eine Schemazeichnung eines diskontinuierlichen Hüllstrommischdüsenverfahrens (Laborbetrieb),
**Fig.3** eine Schemazeichnung eines kontinuierlichen Hüllstrommischdüsenverfahrens (Produktionsprozess, Industrieprozess),
**Fig.4** eine Darstellung des zeitlichen Verlaufs des Druckverlustes in der Mischzone mit Y-Mischdüsenanordnung der Prallstrahldüsen mit einer Spritzenpumpe bei einem Volumenstrom von 20 ml/min während einer Fällung sowie
**Fig.5** den Vermischungseinfluss mit der Fällung von Bariumsulfat anhand der Partikelgröße x (in [nm]) mit steigender Energiedissipationsrate ε (in [W/kg]).

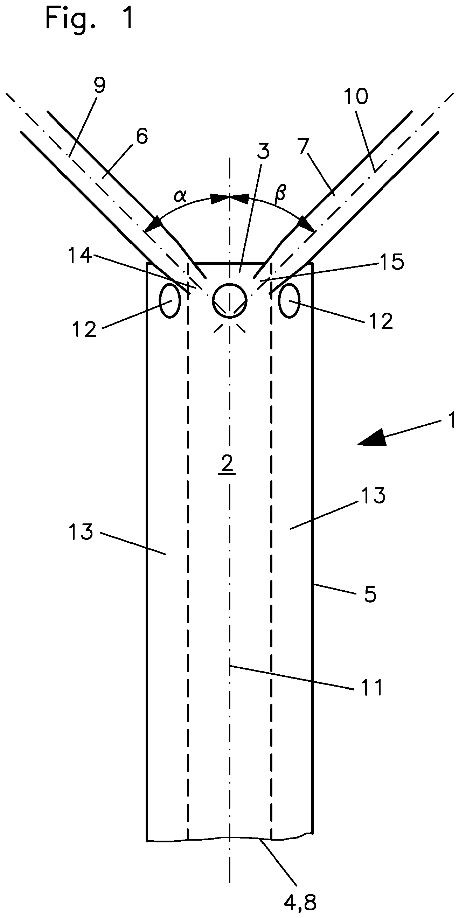

Die in **Fig.1** als Schnittzeichnung dargestellte Vorrichtung **1** für die Durchführung von Fällungsreaktionen unter Beteiligung von mindestens zwei Ausgangsprodukten zu mindestens einem Fällungsreaktionsprodukt umfasst eine Mischzone **2,** die zwischen zwei Endbereichen **3** und **4** von einer bevorzugt rohrförmigen Mantelfläche **5** umgeben ist. In die Mischzone am ersten Endbereich **3** münden zwei Prallstrahldüsen **6** und **7** (Edukt-Jets) für zwei Ausgangsprodukte aus, wobei die Prallstrahldüsen gegenläufig orientierte Ausrichtungen aufweisen und zum Auslass **8** im anderen Endbereich **4** hin geneigt angeordnet sind. Die Symmetrieachsen **9** und **10** der Prallstrahldüsen **6** bzw. **7** kreuzen sich wie bevorzugt auf der Symmetrieachse **11** der Mischkammer und spannen ebenso bevorzugt eine gemeinsame Ebene auf. Die Winkel **α** und **β** der beiden Symmetrieachsen **9** bzw. **10** zur Symmetrieachse **11** sind vorzugsweise gleich (Y-Mischeranordnung). Der Auslass selbst wird im Beispiel durch ein offenes Ende der Vorrichtung im anderen Endbereich **4** gebildet. Im ersten, vorzugsweise oben angeordneten Endbereich **3** sind zudem eine Vielzahl von Zuläufen **12** für ein Hüllstromfluid vorzugsweise seriell und vorzugsweise im gleichen Abstand zueinander auf dem Umfang der Mantelfläche verteilt angeordnet. Über die Zuläufe wird das Hüllstromfluid oder die Hüllstromfluide in Vorrichtung eingeleitet und bildet mittels einer wendelförmig zum anderen Ende **4** orientierten und an die Mantelfläche **5** angrenzenden Vortex-Strömung eine Hüllstromzone **13** zwischen Mantelfläche und Mischzone **2** als eine fluidische Barriere zwischen Mischzone und Mantelfläche. Vorzugsweise münden die Zuläufe tangential zu den Mantelflächen in die Hüllstromzone aus. In dem Ausführungsbeispiel gemäß **Fig.1** erstreckt sich die Hüllstromzone nicht über die Auslässe **14** und **15** der Prallstrahldüsen **6** bzw. **7.**

Die in **Fig.1** dargestellte Vorrichtung wurde als Prototyp (Innendurchmesser der Prallstrahldüsen 0,5 mm, der Mischzone dₘᵢₓ = 2 bis 4mm, Länge der Mischzone Iₘᵢₓ = 30mm) angefertigt und untersucht. Der Prototyp besteht aus Plexiglas (PMMA). So ist die Möglichkeit gegeben Strömungsvorgänge visuell zu erfassen und Stellen in der Mischzone zu beobachten, an welchen sich bevorzugt Anlagerungen bilden. Die Maße der Hüllstrommischdüse orientieren sich an den Maßen standardmäßiger Mischdüsen ohne Hüllstrom (z.B. Y- und Zyklon-Mischdüse).

Der Untersuchung erfolgten hinsichtlich der Fluidmechanik und -dynamik experimentell mit Laser-induzierter Fluoreszenz (LIF) und parallel hierzu theoretisch mit der sog. Computational Fluid Dynamics (CFD). Experimentell wurde eine Verkrustung durch die Fällung schwerlöslicher Salze (A: Kupferoxalat (CuC₂O₄), und B: Strontiumsulfat (SrSO₄)) provoziert. Auf diese Weise konnte die Eignung der Prallstrahldüsen auch für zur Verkrustung/Verblockung neigende Stoffsysteme erprobt werden. Darüber hinaus zeigte sich, dass die Hydrodynamik während des Vermischungsprozesses einen unmittelbaren Einfluss auf die resultierende Partikelgröße hat. Experimentell wurde dieser Einfluss mit Hilfe der Fällung von Bariumsulfat (BaSO₄) charakterisiert.

Experimentell wurde zunächst über die Zuläufe **12** das Hüllstromfluid in das Innenvolumen der Hüllstrommischdüse eingeleitet. Erst anschließend wurden zwei Ausgangsprodukte A und B (Reagenzien) über den jeweiligen der beiden Edukt-Jets über die beiden Prallstrahldüsen **6** und **7** in die Mischzone gedüst. Die Edukt-Jets prallen aufeinander, es kommt zu einer schnellen Vermischung der Edukt-Ströme ohne Kontakt zur Mantelfläche **5.**

Die im Rahmen der Untersuchungen durchgeführten anorganischen Fällungsreaktionen finden alle in wässriger Phase der Ausgangsprodukte und dem daraus gebildeten Fällungsprodukt statt. Als mögliche Hüllstrommedien wurden Wasser (in der Reaktionsphase löslich) und Silikonöl (in der Reaktionsphase unlöslich) untersucht.

### Fällungsreaktion in löslichem Hüllstromfluid:

Ein bevorzugtes, da einfach handhabbares Hüllstromfluid ist Wasser. Beim Betrieb wird der Eintrittsimpuls der Stoffströme der Ausgangsprodukte zur deren Vermischung genutzt, wobei das Mischvolumen aufgrund der abschirmenden Wirkung der Hüllstromzone keinen Kontakt zur Innenwandung der Mantelfläche erhält. Im weiteren Verlauf der Fällungsreaktion vermischen sich die Phasen des Hüllstromfluids und des Reaktionsprodukts sowie der noch verbleibenden Ausgangsprodukte A und B. Verdünnungseffekte und somit Einflüsse auf die Produktqualität wurden bei schnellen Fällungsreaktionen, die nach mehreren hundert Millisekunden beendet sind, nicht beobachtet.

Bei der Verwendung von zu den Ausgangsprodukten und den Reaktionsprodukten artähnlichen Hüllstromfluiden im Hüllstrommischdüsenprozess (Verfahren) ist es möglich, über das Hüllstromfluid weitere Substanzen wie z.B. Additive der Reaktionsphase beizumischen.

In einer bevorzugten Ausgestaltung ist bei einer Fällung von Nanopartikeln zur Stabilisierung einer Dispersion eine Beimischung einer oberflächenaktiven Substanz vorteilhaft, die bevorzugt über eine Zugabe über das Hüllstromfluid erfolgt. Während im oberen Teil nahe des ersten Endbereichs **3** der Mischzone **2** sich, unabhängig vom Hüllstromfluid, Partikel bilden, erfolgt mit zunehmenden Strömungsweg in der Mischzone zur zweiten Endbereich **4** hin eine Einmischung des Hüllstromfluids mit den Additiv zum Reaktionsprodukt. Mit der Strömungsgeschwindigkeit insbesondere des Hüllstromfluids in der Hüllstromzone ist das Zeitintervall einer Additivzugabe einstellbar.

### Fällungsreaktion in unlöslichem Hüllstromfluid:

Ein niederviskoses Silikonöl (ca. 5 mPas) wurde als Hüllstromfluid für den Einsatz in der beanspruchten Vorrichtung (Hüllstrommischer)erprobt. Aufgrund der zur Mantelfläche tangentialen Strömungsrichtung in der Hüllstromzone und der hydrophoben Eigenschaften des Öls bildet sich bei entsprechenden Volumenstromverhältnissen ein flächig durchgehender und damit für die wässrige Phase nicht durchdringbarer Film an der Wand der Mischzone aus. Die Hüllstromzone, die während des Betriebs kontinuierlich existent ist, verhindert einen Kontakt zwischen der in der Mischzone befindlichen Mischung (Reaktionsmedium, d.h. Reaktionsprodukte, vorzugsweise Fällungsreaktionsprodukte einschließlich der Ausgangsprodukte, Zwischenprodukte und Mischungsprodukte) und der Innenwandung der Mantelfläche der Vorrichtung, und damit dort eine mögliche Anlagerung von Feststoffanteilen aus vorgenannten Reaktionsmedium. Während beim Betrieb des Hüllstrommischers (Vorrichtung) mit einem löslichen Hüllstromfluid ein verdünntes Produkt erhalten wird, entsteht bei der Anwendung eines unlöslichen Fluids ein Dreiphasen-Gemisch, wobei der vorgenannte Feststoffanteil überwiegend, vorzugsweise vollständig in dem Reaktionsprodukt enthalten ist.

Eine anschließende Phasentrennung der beiden Flüssigphasen (Reaktionsprodukt und Hüllstromfluid) erfolgt im Beispiel nach einem Ausleiten der Mischung selbst nach intensiver Vermischung nach nur wenigen Sekunden vorzugsweise in einem Schwerkraftabscheider, so dass Silikon-Öl als zirkulierendes Hüllstromfluid in einem eigenen Prozesskreislauf gefahren werden kann und zu dem mindestens einen Zulauf rezykliert wird.

### Prozessschema

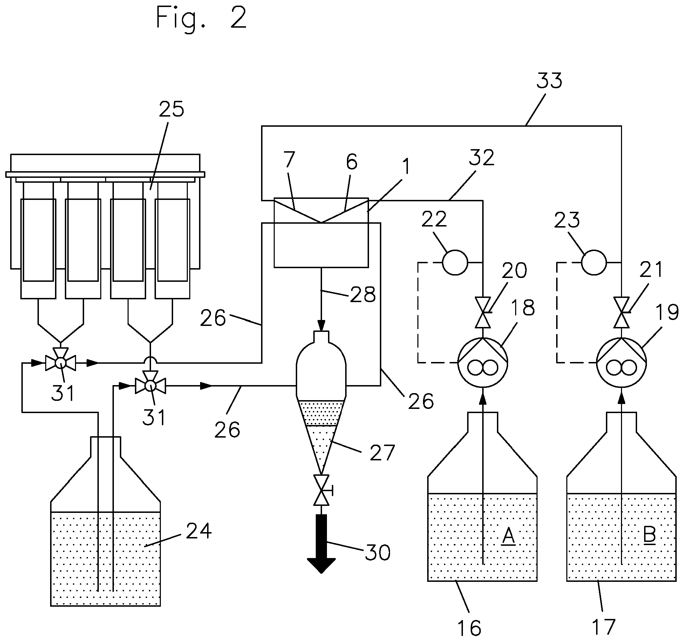

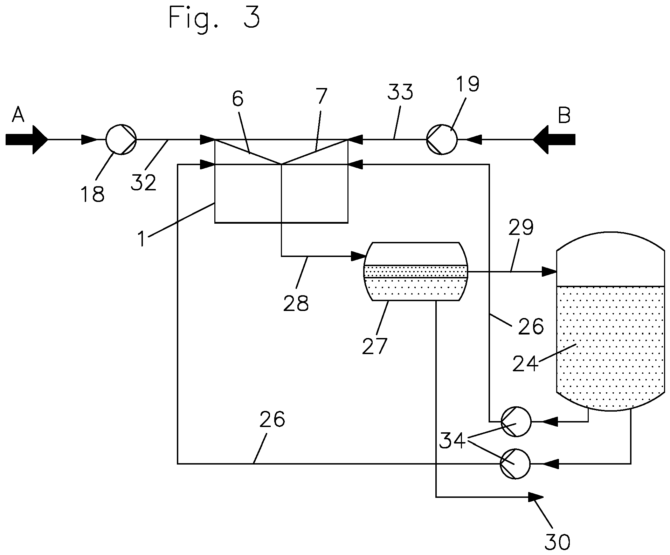

Das Prozessschema des beanspruchten Verfahrens wird anhand **Fig.2** **und** **3** für einen diskontinuierlichen bzw. kontinuierlichen Betrieb näher erläutert.

**Fig.2** zeigt eine Schemazeichnung des diskontinuierlichen Hüllstrommischdüsenverfahrens, wie er beispielsweise im Laborbetrieb stattfindet. Es dient der experimentellen Untersuchung der Fluiddynamik, der Verkrustungsneigung und der Vermischung. Dabei kamen hierbei unterschiedliche Kombinationen an wässrigen Edukt- (Ausgangsprodukte) und Hüllstromfluiden zur Anwendung. Als Hüllstromfluid wurden neben Wasser auch wasserunlösliche Fluide wie Silikon-Öl und Toluol (für letzteres keine Ergebnisse gezeigt) als Hüllstromfluid eingesetzt. Wenn wasserunlösliche Fluide zum Aufbau der Hüllstromzone verwendet werden, entsteht am Mischauslass ein Zwei-Flüssigphasen-Gemisch. Dieses kann in einem Flüssig-Flüssig-Separator (hier Scheidetrichter) getrennt und recycelt werden. Die Vorrichtung umfasst zwei Eduktbehälter **16** und **17** für die beiden Ausgangprodukte A (erstes Ausgangsprodukt) und B (zweites Ausgangsprodukt), die jeweils über eine Förderpumpe **18** bzw. **19** und je eine Zuleitung **32** bzw. **33** über die erste bzw. zweite Prallstrahldüse **6** bzw. **7** in die Mischzone der nur schematisch dargestellten Vorrichtung **1** einleitbar sind. Ein der jeweiligen Förderpumpe nachgeschaltetes Drosselventil **20** und **21** sowie eine FIC-Durchflussmessung und
- Steuerung (FIC = Flow Indication Control) **22** und **23** sind vorteilhafte Ausgestaltungen für eine kontinuierliche und geregelte Eingabe der Ausgangsprodukte in den Prozess. Die Zuführung des Hüllstromfluids in die Vorrichtung **1** erfolgt im Beispiel von einem Vorratsbehälter **24** für das Hüllstromfluid über eine Spritzenpumpenanordnung **25,** zwei Ventilschaltungen **31** und zwei Hüllstromleitungen **26** in die nicht explizit dargestellte Hüllstromzone der Vorrichtung **1.** Weiterhin ist ein Scheidetrichter **27** der Vorrichtung **1** nachgeschaltet. In diesem wird ein die Vorrichtung verlassender Produktstrom **28,** bestehend aus dem Misch- oder Reaktionsprodukt und dem Hüllstromfluid, eingeleitet und wie zuvor beschrieben in die zwei Phasen - Hüllstromfluid und Misch- oder Reaktionsprodukt - getrennt. Das Hüllstromfluid sowie das Misch- oder Reaktionsprodukt werden in einen separaten Auffangbehälter **30** für eine weitere Verwertung gesammelt.

**Fig.3** dagegen gibt beispielhaft einen kontinuierlichen, vorzugsweise stationären Betrieb des Hüllstrommischdüsenverfahrens wieder, wie er z.B. als Industrieprozess umsetzbar ist. Hier erfolgt eine kontinuierliche Zuführung der Ausgangsprodukte A und B ebenfalls über entsprechende Förderpumpen **18** bzw. **19,** Zuleitungen **32** bzw. **33** und Prallstrahldüsen **6** bzw. **7** in die Mischzone der nur schematisch dargestellten Vorrichtung **1.** Die Bereitstellung des Hüllstromfluids erfolgt dagegen wie zuvor beschrieben über einen Vorratsbehälter **24** für das Hüllstromfluid. Die Versorgung der Hüllstromzone mit Hüllstromfluid erfolgt ebenfalls über mindestens eine Hüllstromleitung **26** in die nicht explizit dargestellte Hüllstromzone, jedoch abweichend getrieben von mindestens einer Hüllstromfluidpumpe **34.** Für einen kontinuierlichen Betrieb mit einem unlöslichen Hüllstromfluid wird eine zuvor beschriebene Rezyklierung von Hüllstromfluid vorgeschlagen, vorzugsweise über Mittel zur Phasentrennung 27 des die Vorrichtung verlassenden Volumenstroms **28,** bestehend aus Hüllstromfluid und Misch- oder Reaktionsprodukt, wobei das Hüllstromfluid in den Vorratsbehälter **24** zurückgeleitet wird. Das Hüllstromfluid zirkuliert somit kontinuierlich in einem eigenen Kreislauf.

### Strömungssimulation - Computational Fluid Dynamics (CFD)

Mit Hilfe CFD-basierter Berechnungsmethoden (2 Phasen-Volume of Fluid (VOF)-Simulation, instationär) wurde das Strömungsfeld in der Mischzone und der Hüllstromzone der Vorrichtung simuliert. Dabei zeigte sich bei einer nicht mit den wässrigen Edukten löslichen Silikonölphase als Hüllstromfluid, dass sich eine Hüllstromzone in der Nähe der Innenwandung der Mantelfläche zuverlässig ausbildet. Durch Reduzierung des Hüllstromfluidstroms im Verhältnis zu der Zuleitung der Ausgangsprodukte ist ein Grenzverhältnis ermittelbar, bei dem die Barrierewirkung der Hüllstromzone zwischen Innenfläche der Mantelfläche zur Mischzone bei möglichst geringem Hüllsstromfluidverbrauch noch zuverlässig gewährleistet ist.

Besonders sensibel gegenüber den Verkrustungen ist der Bereich der Austritte der Prallstrahldüsen im ersten Endbereich der Mischzone, d.h. nahe der in die Hüllstromzone ausmündenden Zuläufen des Hüllstromfluids. Wird mit Stoffsystemen gearbeitet die starke Tendenzen zur Verkrustung und Verblockung zeigen, ist dieser Bereich besonders kritisch. Schnelle Feststoffbildungsreaktionen können hier leicht zu einer Verblockung der relativ kleinen Jet-Durchmesser der Prallstrahldüsen führen. Laut CFD sind mit Hilfe der Hüllströme diese Edukt-Zuläufe wirkungsvoll vor Feststoffverkrustungen schützbar, vor allem dann, wenn sich die Hüllstromzone über die Auslassöffnungen der Prallstrahldüsen erstreckt.

### Laser-induzierte Fluoreszenz (LIF)

LIF ist ein spektroskopisches Standardverfahren zur Untersuchung von Vermischungsvorgängen, das es ermöglicht, das Strömungsfeld in der Hüllstrommischdüse experimentell zu untersuchen und lokale Phänomene zu visualisieren. Dazu wird über die Jets der Ausgangsprodukte eine zusätzliche wässrige Lösung mit einem fluoreszierenden Farbstoff in die Mischzone eingespritzt.

Im Rahmen einer empirischen Verifikation wird als Hüllstromfluid ein Silikonöl verwendet, dessen viskose Eigenschaften der von Wasser nahekommt (kinematische Viskosität ν_{Öl} = 5 · ν_{wasser}). Mittels eines Laserstrahls wird hierbei ein fluoreszierender Tracer-Farbstoff der wässrigen Phase angeregt und das Fluoreszenzlicht mit einer CCD-Kamera erfasst. Das dabei erhaltene Graustufen-Bild, vorzugsweise über den gesamten Querschnitt der Mischzone (Durchmesser ca. 3mm) ist somit hinsichtlich der Separation der Phasen aussagefähig. Wie erwartet erstreckt sich die Hüllstromzone (Silikonölschicht dunkel / schwarz) außen um die Mischzone mit den wässrigen Phasenanteilen mit Fluoreszenz-Mittel (hell/weiß). Es ist zuverlässig ermittelbar, ob und wie gut und vollständig die Hüllstromzone die Innenwandung benetzt und so von der Mischzone isoliert. Es zeigte sich auch, dass die Barrierewirkung grundsätzlich zum Auslauf hin (am anderen Ende der Mischzone) tendenziell abnimmt, d.h. die Gefahr zu einer Verkrustung der Innenfläche der Mantelfläche zunimmt.

### Fällungsexperimente zur bewussten Verkrustung

Zur Erprobung des Hüllstrommischdüsenverfahrens wurden als Hüllstromfluid und als Ausgangsstoffe Stoffsysteme ausgewählt, die zur Bildung von Verkrustungen neigen. Dabei wird zumeist der Vergleich zur Referenzmischdüse Y-Mischer als etablierter Laborprozess gezogen (dₘᵢₓ = 2mm, d_{Jet} = 0,5mm, α = β = 75° sowie lₘᵢₓ = 30mm).

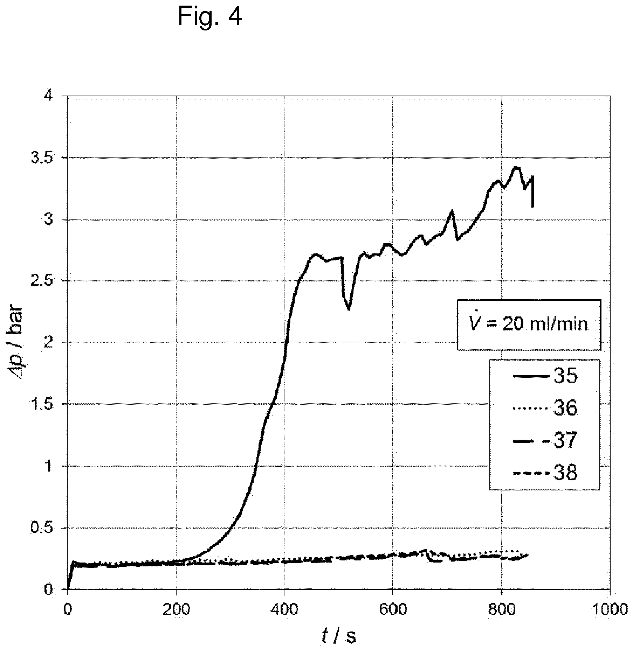

Fällungsreaktionen mit Kupferoxalat (CuC₂O₄) gelten hinsichtlich Verkrustungen oder Verstopfungen als besonders problematisch. **Fig.4** gibt den Druckverlust Δp (in [bar]) während der Fällungsreaktion und für reine Wasserfahrten in einer Vorrichtung (Y-Mischdüse ohne Hüllstromzone und Hüllstrommischdüse HSM, diskontinuierlicher Betrieb, vgl. **Fig.2****)** über der Prozesszeit t (in [sec]) wieder. Die Vorrichtung und insbesondere die Prallstrahldüsenanordnung sind bei beiden getesteten Vorrichtungen identisch. Die Konzentrationen der wässrigen Edukt-Lösungen mit Kupfersulfat und Natriumoxalat lagen in den durchgeführten Experimenten jeweils bei 0,25 mol/l. Während der Fällung wurde der Druckverlust Δp in der Mischzone der Hüllstrommischdüse über die Zeit t aufgezeichnet (vgl. **Fig.4****).** Der Druckverlust lässt Rückschlüsse auf den Verkrustungsgrad zu.

Die Druckverlustverläufe für das Durchströmen mit Wasser (gestrichelt) gelten als Referenz zur verkrustungsfreien Durchströmung. Sie zeigen also den Druckverlust, der grundsätzlich bei der Durchströmung der jeweiligen Vorrichtung entsteht oder der durch die Peripherie erzeugt wird.

Im vorliegenden Beispiel ist ein signifikanter Anstieg des Druckverlustes und damit einhergehenden Verkrustung der Innenwandung der Mantelfläche in der Y-Mischdüse ohne Hüllstromzone, ab ca. 200 sec insbesondere exponentiell bei ca. 300 bis 400 sec zu beobachten, der bei der Vorrichtung mit Hüllstromzone nicht auftritt. Ab einem Druckverlust von ca. 2,6 bar kann die Strömung in der Mischzone Teile der Verkrustung wieder lösen. Aufgrund von Löse- und Verkrustungsvorgängen steigt der Druckverlust nun unstetig an bis das Prozessende erreicht ist. Die Beendigung des Prozesses ist durch die Volumenvorgabe der verwendeten Spritzenpumpe (vgl. **Fig.2****)** beschränkt. Der Druckverlust erreicht im Beispiel mit einer Verstopfung der Vorrichtung (Durchströmung nicht mehr möglich) sein Maximum. Dies wird deswegen vermutet, dass ein erneutes Anfahren des Prozesses mit ungereinigter Vorrichtung nicht möglich war.

Ansonsten ist das Prozessende bei einem herkömmlichen Mischdüsenprozess ohne Hüllstromzone durch den maximal zu kompensierenden Druckverlust der Pumpen vorgegeben.

Die beanspruchte Vorrichtung (Hüllstrommischdüse) zeigte dagegen im Rahmen der Betriebsdauer beim untersuchten Volumenstrom keinen signifikanten Anstieg des Druckverlustes und damit auch keine Verstopfungstendenz **(****Fig.4****).** Die Verläufe des Druckverlustes während der Fällung und der Durchströmung lediglich mit Wasser (gestrichelte Linie) liegen aufeinander.

Bei einer anschließenden Betrachtung der untersuchten Vorrichtungen wurde bestätigt, dass Bereiche, die vom Hüllstromfluid überströmt worden sind, von Verkrustungen und Ablagerungen nicht oder nur minimal betroffen waren. Dieser Effekt tritt bei Öl als Hüllstromfluid noch signifikanter auf, d.h. hier konnten keinerlei Verkrustungsneigungen detektiert werden.

Ferner wurde auch nachgewiesen, dass ein Volumenstromverhältnis der von Hüllstromfluid (Wasser) zu Ausgangsprodukte von 1:1 die Innenwandungen der Mantelfläche effektiv vor Feststoffanlagerungen schützt. Aufgrund der besseren Barrierewirkung von Öl und anderen nicht mit den Ausgangsprodukten lösbaren Hüllstromfluiden ist hier grundsätzlich auch ein geringeres Verhältnis, beispielsweise zwischen 1:2 und 1:5 ausreichend.

Bei alternativen Versuchen mit einer Fällung von Strontiumsulfat (SrSO₄) mit hohen Übersättigungen setzt sich bei einem Nichtanlegen eines Hüllstroms der gebildete Feststoff ebenfalls bevorzugt als Verkrustungen an die Innenwandung der Mantelflächen ab. Die Verkrustungen waren jedoch durch ein Anlegen eines erhöhten Drucks (8 und 20 bar, vorzugsweise zwischen 10 und 15 bar, z.B. 12 bar) wieder entfernbar.

Wie bereits bei der Fällung von Kupferoxalat beobachtet kann im Einsatz mit Wasser als Hüllstromfluid der zuerst durchströmte (obere) Teil der Vorrichtung frei von einer Verkrustung gehalten werden. Im weiteren Verlauf der Durchströmung nehmen der Hüllstromimpuls und damit auch die Barrierewirkung ab, und eine gewöhnliche Rohrströmung bildet sich aus. Eine Anlagerung von Feststoff an der Wand der Mischzone kann nun nicht mehr unterbunden werden.

Um eine in Strömungsrichtung nachlassende Barrierewirkung der Hüllstromzone entgegenzuwirken wird ein in axialer Ausrichtung in Strömungsrichtung sich erweiternder Querschnitt der Mischzone zzgl. Hüllstromzone vorgeschlagen. Es bestätigte sich experimentell, dass im turbulenten Regime, in dem die Mischer für industrierelevante Umsätze betrieben werden, die effektive Mischzone in axialer Richtung auf 1,2 bis 2·dₘᵢₓ (entsprechend dem 1,2-fachen bis doppeltem Durchmesser der Mischzone) begrenzt ist und dieser Bereich durch die Hüllstromzone ausreichend abschirmbar ist. Zur Vermeidung einer Gefahr eines Zusetzens der nachfolgenden Innenwandungsbereichen durch Verkrustung wird vorzugsweise nur in diesem axial nachfolgenden Bereich die vorgenannte Querschnittserweiterung vorgeschlagen.

Wesentlich dabei ist, dass die Querschnittserweiterung in axialer Richtung nur über den Faktor 1,0 (keine Aufweitung) so angehoben wird, dass sich keine Kavitation aufgrund sich beschleunigender Fluidbestandteile bildet. Grundsätzlich nimmt die Wahrscheinlichkeit von Kavitation mit zunehmender Aufweitung und abnehmender Mischzonenlänge zu, während sie mit dem Löslichkeitsgrad des Hüllstromfluids mit den Ausgangsprodukten und/oder deren Mischung oder Fällungsreaktionsprodukten wieder abnimmt. Insofern wird als Obergrenze für eine Aufweitung der Mischzone der doppelte Durchmesser bei vollständiger Löslichkeit des Hüllstromfluids im Reaktionsfulid vorgeschlagen, während die Aufweitung um den geringeren Faktor 1,2 begrenzt werden soll, wenn das Hüllstromfluid nicht oder nur partiell in mindestens einem der zwei Ausgangsprodukte und/oder deren Mischung oder Fällungsreaktionsprodukten löslich ist.

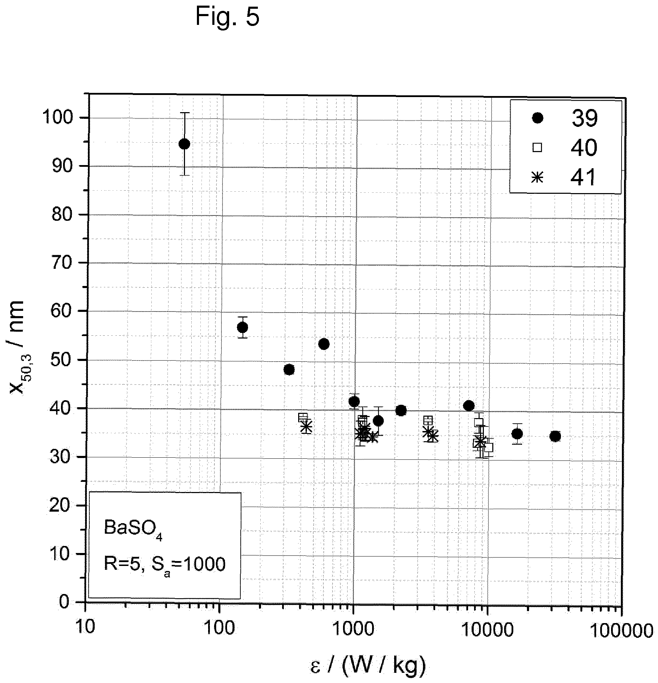

Wie weitere experimentelle Ergebnisse belegen, ist die Vermischung in einer Hüllstrommischdüse mit den Mischergebnissen gewöhnlicher Y-Mischdüsen vergleichbar. **Fig.5** zeigt den Vermischungseinfluss mit der Fällung von Bariumsulfat anhand der Partikelgröße X (in [nm]) mit steigender Energiedissipationsrate ε (in [W/kg]). Dabei werden die Volumenströme der Ausgangsprodukte immer mehr erhöht. Bei jedem neu eingestellten Volumenstrom wird die Partikelgröße der Bariumsulfat-Partikeln gemessen, die als Maß für die Beurteilung der Vermischung beim jeweiligen Volumenstrom gilt. Aus Volumenstrom und Druckverlust kann die Energiedissipationsrate berechnet werden. Über die Energiedissipationsrate ist es möglich verschiedene Mischer-Typen unabhängig miteinander zu vergleichen. Die Konzentrationen der verwendeten wässrigen Ausgangsprodukt-Lösungen Natriumsulfat und Bariumchlorid lag jeweils bei 0,09 mol/l bzw. 0,3 mol/l. Wie in **Fig.5** dargestellt, bilden sich zwei Bereiche aus.

Betrachtet man den Verlauf der Partikelgröße für eine gewöhnliche Y-Mischdüse, ist ein starker Abfall bei niedrigen Energiedissipationsraten zu erkennen. Hier spricht man vom mischungs-maskierten Bereich (bis ca. 1000 W/kg). Die Vermischung maskiert also die minimale Partikelgröße, die eigentlich aus den Konzentrationen der Ausgangsprodukte resultieren würde. Die Zeit die zur perfekten Vermischung der Ausgangsprodukte benötigt wird, ist hier länger als die Zeit zur Bildung des Feststoffes. Bei höheren Energiedissipationsraten ist die Zeit zur perfekten Vermischung der Ausgangsprodukte kürzer als die Zeit der Feststoffbildung, das treibende Gefälle zur Partikelbildung wird nicht durch die Vermischung beeinflusst und es entsteht immer die gleiche Partikelgröße, wie in **Fig.5** für Energiedissipationsraten größer als 1000 W/kg ersichtlich.

### Literaturverzeichnis:

[1] Y. Liu, C. Cheng, R.K. Prud'homme, R.O. Fox; Mixing in a multi-inlet vortex mixer (MIVM) for flash nano-precipitation, Chem. Eng. Sc. Vol. 63 Issue 11, 2008.

### Bezugszeichenliste

- 1: Vorrichtung
- 2: Mischzone
- 3: Erster Endbereich
- 4: Zweiter Endbereich
- 5: Mantelfläche
- 6: Erste Prallstrahldüse für (erstes) Ausgangsprodukt A
- 7: Zweite Prallstrahldüse für (zweites) Ausgangsprodukt B
- 8: Auslass
- 9: Symmetrieachsen der ersten Prallstrahldüse
- 10: Symmetrieachsen der zweiten Prallstrahldüse
- 11: Symmetrieachse der Mischkammer
- 12: Zuläufe für Hüllstromfluid
- 13: Hüllstromzone
- 14: Auslass der ersten Prallstrahldüse
- 15: Auslass der zweiten Prallstrahldüse
- 16: Eduktbehälter für (erstes) Ausgangsprodukt A
- 17: Eduktbehälter für (zweites) Ausgangsprodukt B
- 18: Förderpumpe für (erstes) Ausgangsprodukt A
- 19: Förderpumpe für (zweites) Ausgangsprodukt B
- 20: Drosselventil für (erstes) Ausgangsprodukt A
- 21: Drosselventil für (zweites) Ausgangsprodukt B
- 22: FIC-Durchflussmessung und -steuerung für (erstes) Ausgangsprodukt A
- 23: FIC-Durchflussmessung und -steuerung für (zweites) Ausgangsprodukt B
- 24: Vorratsbehälter
- 25: Spritzenpumpenanordnung
- 26: Hüllstromleitung
- 27: Scheidetrichter (Mittel zur Phasentrennung)
- 28: Produktstrom
- 29: Rückführleitung
- 30: Auffangbehälter
- 31: Ventilschaltung
- 32: Zuleitung für (erstes) Ausgangsprodukt A
- 33: Zuleitung für (zweites) Ausgangsprodukt B
- 34: Hüllstromfluidpumpe
- 35: Verlauf des Druckverlustes Δp einer Kupferoxalat(CuC₂O₄)-Fällung in Y-Mischdüse
- 36: Verlauf des Druckverlustes Δp von Wasser in Y-Mischdüse
- 37: Verlauf des Druckverlustes Δp einer Kupferoxalat(CuC₂O₄)-Fällung in Hüllstrommischdüse
- 38: Verlauf des Druckverlustes Δp von Wasser in Hüllstrommischdüse
- 39: Verlauf der Partikelgröße x für Y-Mischdüse
- 40: Verlauf der Partikelgröße x für Hüllstrommischdüse mit Wasser als Hüllstromfluid
- 41: Verlauf der Partikelgröße x für Hüllstrommischdüse mit Silikonöl als Hüllstromfluid

## Patentansprüche

1. Vorrichtung **(1)** für die Durchführung von Fällungsreaktionen unter Beteiligung von mindestens zwei Ausgangsprodukten **(A, B)** zu mindestens einem Fällungsreaktionsprodukt, umfassend
a) ein Innenvolumen **(2, 13),** das zwischen zwei Endbereichen **(3, 4)** von einer Mantelfläche **(5)** umgeben ist,
b) mindestens zwei in das Innenvolumen orientierte Prallstrahldüsen **(6, 7)** für die mindestens zwei Ausgangsprodukte, wobei die Prallstrahldüsen gegenläufig orientierte Ausrichtungen aufweisen sowie
c) mindestens ein in das Innenvolumen ausmündender Zulauf **(12)** für ein Hüllstromfluid,
**dadurch gekennzeichnet, dass**
d) mindestens einer des mindestens einen Zulaufs und die mindestens zwei Prallstrahldüsen in einem Endbereich **(3)** des Innenvolumens und ein Auslass **(8)** für das mindestens eine Fällungsreaktionsprodukt und das Hüllstromfluid in dem anderen Endbereich **(4)** vorgesehen sind sowie
e) der mindestens eine in das Innenvolumen ausmündende Zulauf tangential zur Mantelfläche in das Innenvolumen ausmündet, angepasst um eine an die Mantelfläche **(5)** angrenzende Vortex-Strömung zu bilden.

2. Vorrichtung nach Anspruch 1, **dadurch gekennzeichnet, dass** das Innenvolumen durch ein zylindrisches Volumen gebildet ist.

3. Vorrichtung nach einem der vorgenannten Ansprüche, **dadurch gekennzeichnet, dass** die Mantelfläche eine zum Innenvolumen gerichtete Oberfläche einen Mittelwert der Rauigkeit von 1 bis 50 µm, vorzugsweise zwischen 10 und 20 µm aufweist.

4. Vorrichtung nach einem der vorgenannten Ansprüche, **dadurch gekennzeichnet, dass** die gegenläufig orientierten Ausrichtungen der mindestens zwei Prallstrahldüsen **(6, 7)** jeweils um deren Symmetriegeraden **(9, 10)** erstrecken, wobei sich die Symmetriegeraden im Innenvolumen schneiden.

5. Vorrichtung nach Anspruch 4, **dadurch gekennzeichnet, dass** sich die Symmetriegeraden mit einem Winkel ungleich 180° schneiden.

6. Vorrichtung nach einem der vorgenannten Ansprüche, **dadurch gekennzeichnet, dass** die Symmetriegeraden **(9, 10)** in Richtung des Auslasses **(8)** orientiert sind.

7. Vorrichtung nach einem der vorgenannten Ansprüche, **dadurch gekennzeichnet, dass** der mindestens eine Zulauf **(12)** durch mindestens eine Schlitzdüse gebildet wird.

8. Vorrichtung nach einem der vorgenannten Ansprüche, **dadurch gekennzeichnet, dass** der mindestens eine Zulauf **(12)** mindestens einen zusätzlichen Zulauf für ein Hüllstromfluid an der Mantelfläche **(5)** abseits der beiden Endbereiche **(3, 4)** umfasst.

9. Vorrichtung nach einem der vorgenannten Ansprüche, **dadurch gekennzeichnet, dass** am Auslass **(8)** Mittel zur Phasentrennung **(27, 34)** zwischen dem Hüllstromfluid und Fällungsreaktionsprodukt vorgesehen sind.

10. Vorrichtung nach Anspruch 9, **dadurch gekennzeichnet, dass** eine Leitung, umfassend eine Rückführleitung **(29)** für das Hüllstromfluid vom Auslass **(8)** zurück zu mindestens einen in das Innenvolumen ausmündenden Zulauf für ein Hüllstromfluid vorgesehen ist.

11. Verfahren für die Durchführung von Fällungsreaktionen unter Beteiligung von mindestens zwei Ausgangsprodukten, umfassend die folgenden Verfahrensschritte:
a) Bereitstellung einer Vorrichtung **(1)** nach einem der vorgenannten Ansprüche,
b) Sinbringen eines Hüllstromfluids durch den mindestens einen Zulauf in das Innenvolumen sowie
c) Einbringen der mindestens zwei Ausgangsprodukte **(A, B)** durch die mindestens zwei in das Innenvolumen orientierte Prallstrahldüsen **(6, 7),** wobei Prallstrahldüsen gegenläufig orientierte Ausrichtungen aufweisen, wobei die mindesten zwei Ausgangsprodukte im Innenvolumen eine Mischzone ausbilden und in der Mischzone zu einem Fällungsreaktionsprodukt gewandelt werden,
d) Ausleiten einer Mischung aus Fällungsreaktionsprodukt sowie dem Hüllstromfluid über den Auslass **(8)** aus dem Innenvolumen,
**dadurch gekennzeichnet, dass**
e) das Einbringen des Hüllstromfluids durch den mindestens einen Zulauf in das Innenvolumen tangential zur Mantelfläche erfolgt, wobei sich im Innenvolumen eine wendelförmige Vortex-Strömung als eine Hüllstromzone ausbildet,
f) die Mantelfläche **(5)** innen durch das Hüllstromfluid benetzt ist, sodass eine unmittelbare Einwirkung der gemischten Ausgangsprodukte **(A, B)** und/oder des Fällungsreaktionsprodukts auf die Innenwandung der Mantelfläche verhindert wird.

12. Verfahren nach Anspruch 11, **dadurch gekennzeichnet, dass** das Hüllstromfluid und die mindestens zwei Ausgangsprodukte **(A, B)** und/oder deren Mischung oder Fällungsreaktionsprodukt eine Löslichkeit oder partielle Löslichkeit aufweisen.

13. Verfahren nach Anspruch 12, **dadurch gekennzeichnet, dass** dem Hüllstromfluid mindestens ein Additiv für das Fällungsreaktionsprodukt eingemischt ist, das über die Hüllstromzone **(13)** im Innenvolumen in die Ausgangsprodukte **(A, B)** und/oder das Fällungsreaktionsprodukt übergeleitet wird.

14. Verfahren nach Anspruch 11, **dadurch gekennzeichnet, dass** das Hüllstromfluid ein Gas oder ein Aerosol ist.

15. Verfahren nach Anspruch 11, **dadurch gekennzeichnet, dass** das Hüllstromfluid unlöslich mit allen der mindestens zwei Ausgangsprodukte und deren Mischung ist.

16. Verfahren nach einem der Ansprüche 11 bis 15, **dadurch gekennzeichnet, dass** eine dem Ausleiten nachfolgende Phasentrennung der Mischung in das Fällungsreaktionsprodukt sowie dem Hüllstromfluid erfolgt.

17. Verfahren nach Anspruch 16, **dadurch gekennzeichnet, dass** das Hüllstromfluid nach der Phasentrennung zu dem mindestens einen Zulauf rezykliert wird.

## Claims

1. Device (1) for performing precipitation reactions with the participation of at least two output products **(A, B)** to at least one precipitation reaction product, comprising
a) an inner volume space (2, 13) which between two end regions (3, 4) is surrounded by a casing surface (5),
b) at least two impact jet nozzles (6, 7), oriented into the inner volume space, for the at least two output products, wherein the impact jet nozzles exhibit alignments which are oriented in counter-directions, and
c) at least one inlet (12) for an envelope flow fluid, opening into the inner volume space,
**characterised in that**
d) at least one of the at least one inlet and the at least two impact jet nozzles are provided in an end region (3) of the inner volume space, and an outlet (8) for the at least one precipitation reaction product and the envelope flow fluid are provided in the other end region (4), and
e) the at least one inlet, opening into the inner volume space, opens into the inner volume space tangentially to the casing surface, adjusted so as to form a vortex flow delimited at the casing surface (5).

2. Device according to claim 1, **characterised in that** the inner volume space is formed by a cylindrical volume.

3. Device according to any one of the preceding claims, **characterised in that** the casing surface comprises a surface directed towards the inner volume space with a mean roughness value of 1 to 50 µm, preferably between 10 and 20 µm.

4. Device according to any one of the preceding claims, **characterised in that** the counter-oriented directions of the at least two impact jet nozzles (6, 7) extend in each case about their symmetry straight lines (9, 10), wherein the symmetry straight lines intersect in the inner volume space.

5. Device according to claim 4, **characterised in that** the symmetry straight lines intersect at an angle different from 180°.

6. Device according to any one of the preceding claims, **characterised in that** the symmetry straight lines (9, 10) are oriented in the direction of the outlet (8).

7. Device according to any one of the preceding claims, **characterised in that** the at least one inlet (12) is formed by at least one slot nozzle.

8. Device according to any one of the preceding claims, **characterised in that** the at least one inlet (12) comprises at least one additional inlet for an envelope flow fluid at the casing surface (5) which is spaced apart from the two end regions (3, 4).

9. Device according to any one of the preceding claims, **characterised in that** means are provided at the outlet (8) for phase separation (27, 34) between the envelope flow fluid and the precipitation reaction product.

10. Device according to claim 9, **characterised in that** a line is provided, comprising a return line (29) for the envelope flow fluid from the outlet (8) back to at least one inlet for a casing flow fluid, opening into the inner volume space.

11. Method for performing precipitation reactions with the participation of at least two output products, comprising the following method steps:
a) provision of a device (1) according to any one of the preceding claims,
b) introducing an envelope flow fluid through the at least one inlet into the inner volume space, and
c) introducing the at least two output products **(A, B)** through the at least two impact jet nozzles (6, 7) oriented into the inner volume space, wherein the impact jet nozzles exhibit alignments which are oriented in counter-directions, wherein the at least two output products form a mix zone in the inner volume space, and are converted in the mix zone to form one precipitation reaction product,
d) conducting away of a mixture of precipitation reaction product and the envelope flow fluid via the outlet (8) out of the inner volume space,
**characterised in that**
e) the introducing of the envelope flow fluid through the at least one inlet into the inner volume space takes place tangentially to the casing surface, wherein a helical shaped vortex flow is formed as an envelope flow zone,
f) the casing surface (5) is wetted internally by the envelope flow fluid, such that a direct effect of the mixed output products **(A, B)** and/or of the precipitation reaction product onto the inner wall of the casing surface is prevented.

12. Method according to claim 11, **characterised in that** the envelope flow fluid and the at least two output products **(A, B)** and/or their mixture or precipitation reaction product exhibit solubility or partial solubility.

13. Method according to claim 12, **characterised in that** at least one additive for the precipitation reaction product is mixed into the envelope flow fluid, which is conveyed over the envelope flow zone (13) in the inner volume space into the output products **(A, B)** and/or into the precipitation reaction product.

14. Method according to claim 11, **characterised in that** the envelope flow fluid is a gas or an aerosol.

15. Method according to claim 11, **characterised in that** the envelope flow fluid is insoluble with all of the at least two output products and their mixture.

16. Method according to any one of claims 11 to 15, **characterised in that** a phase separation of the mixture into the precipitation reaction product and the envelope flow fluid takes place following the conveying to discharge.

17. Method according to claim 16, **characterised in that** the envelope flow fluid is recycled to the at least one inlet after the phase separation.

## Revendications

1. Dispositif (1) pour effectuer des réactions de précipitation avec au moins deux produits de départ (A, B) pour obtenir au moins un précipité de réaction,
comprenant :
a) un volume intérieur (2, 13) entouré par une surface-enveloppe (5) entre deux zones d'extrémité (3, 4),
b) au moins deux buses à jet brisant (6, 7) orientées vers le volume intérieur pour au moins les deux produits de réaction, les buses à jet brisant ayant des orientations opposées ainsi que,
c) au moins une arrivée (12) de fluide de flux enveloppant débouchant dans le volume intérieur,
dispositif **caractérisé en ce que**
d) au moins l'une des arrivées et au moins les deux buses à jet brisant sont dans une zone d'extrémité (3) du volume intérieur et une sortie (8) pour au moins un précipité de réactions et le fluide du flux enveloppant dans l'autre zone d'extrémité (4) ainsi que,
e) au moins une arrivée débouchant dans le volume intérieur arrive tangentiellement à la surface enveloppe dans le volume intérieur, de façon adaptée pour former un écoulement en vortex adjacent à la surface-enveloppe (5).

2. Dispositif selon la revendication 1,
**caractérisé en ce que**
le volume intérieur est un volume cylindrique.

3. Dispositif selon l'une des revendications précédentes,
**caractérisé en ce que**
la surface enveloppe est une surface orientée par rapport au volume intérieur ayant une valeur moyenne de rugosité de 1 à 50 µm, de préférence comprise entre 10 et 20 µm.

4. Dispositif selon l'une des revendications précédentes,
**caractérisé en ce que**
les orientations opposées l'une à l'autre au moins des deux buses à jet brisant (6, 7) entourent respectivement leur axe de symétrie (9, 10) respectif, ces axes de symétrie se coupant dans le volume intérieur.

5. Dispositif selon la revendication 4,
**caractérisé en ce que**
les axes de symétrie se coupent suivant un angle différent de 180°.

6. Dispositif selon l'une des revendications précédentes,
**caractérisé en ce que**
les axes de symétrie (9, 10) sont orientés en direction de la sortie (8).

7. Dispositif selon l'une des revendications précédentes,
**caractérisé en ce qu'**
au moins une entrée (12) est formée par au moins une buse à fente.

8. Dispositif selon l'une des revendications précédentes,
**caractérisé en ce que**
au moins une entrée (12) comprend au moins une entrée supplémentaire pour un fluide de flux-enveloppe à la surface enveloppe (5) en dehors des deux zones d'extrémité (3, 4).

9. Dispositif selon l'une des revendications précédentes,
**caractérisé en ce que**
la sortie (8) comporte des moyens de séparation de phase (27, 34) entre le fluide du flux-enveloppe et le précipité de réaction.

10. Dispositif selon la revendication 9,
**caractérisé en ce qu'**il comprend :
une conduite comprenant une conduite de retour (29) pour le fluide du flux-enveloppe de la sortie (8) en retour vers au moins l'une des entrées débouchant dans le volume intérieur pour le fluide de flux-enveloppe.

11. Procédé de mise en œuvre de réactions de précipitation avec au moins deux produits de départ comprenant les étapes consistant à :
a) fournir un dispositif (1) selon l'une des revendications précédentes,
b) introduire un fluide de flux-enveloppe par au moins une entrée dans le volume intérieur, et
c) introduire au moins deux produits de départ (A, B) à travers les buses à jet brisant (6, 7) orientées dans le volume intérieur, les buses à jet brisant ayant des directions opposées l'une à l'autre, au moins les deux produits de départ développent dans le volume intérieur une zone de mélange, et sont transformés dans cette zone de mélange en un précipité de réaction,
d) évacuer hors du volume intérieur le mélange du précipité de réaction et du fluide du flux-enveloppe par la sortie (8),
procédé **caractérisé en ce que**
e) l'introduction du fluide de flux-enveloppe par au moins une entrée dans le volume intérieur se fait tangentiellement par rapport à la surface-enveloppe et développe un écoulement en vortex, en hélice, dans le volume intérieur comme zone de flux-enveloppe,
f) la surface enveloppe (5) est mouillée à l'intérieur par le fluide du flux-enveloppe de façon à éviter une action directe des produits de départ (A, B) mélangés et/ou du précipité de réaction sur la paroi intérieure de la surface-enveloppe.

12. Procédé selon la revendication 11,
**caractérisé en ce que**
le fluide du flux-enveloppe et au moins les deux produits de départ (A, B) et/ou leur mélange ou le précipité de réaction sont solubles ou partiellement solubles.

13. Procédé selon la revendication 12,
**caractérisé en ce que**
au moins un additif est mélangé au le fluide du flux-enveloppe pour le précipité de réaction, cet additif étant transféré par la zone du flux-enveloppe (13) dans le volume intérieur dans les produits de départ (A, B) et/ou le précipité de réaction.

14. Procédé selon la revendication 11,
**caractérisé en ce que**
le fluide du flux-enveloppe est un gaz ou un aérosol.

15. Procédé selon la revendication 11,
**caractérisé en ce que**
le fluide du flux-enveloppe n'est pas soluble dans au moins tous les deux produits de départ et leur mélange.

16. Procédé selon l'une des revendications 11 à 15,
**caractérisé en ce que**
pour effectuer une séparation de phase du mélange pour obtenir en sortie le précipité de réaction et le fluide du flux-enveloppe.

17. Procédé selon la revendication 16,
**caractérisé en ce qu'**
après la séparation de phase, le fluide du flux-enveloppe est recyclé vers au moins une entrée.
